# EUROPEAN PATENT APPLICATION

(11) **EP 4 637 098 A1**
(43) Date of publication of application: **22.10.2025**
(21) Application number: 23916640.8
(22) Date of filing: 16.01.2023
(51) Int. Cl.: H04L 41/082, G06F 8/65

(54) **DEVICE RESCUE METHOD AND RELATED DEVICE**

(71) Applicant: Shenzhen Yinwang Intelligent Technologies Co., Ltd., Shenzhen, Guangdong 518110 (CN)
(72) Inventor: LIU, Zhibin, Shenzhen, Guangdong 518129 (CN); LIU, Lei, Shenzhen, Guangdong 518129 (CN); YANG, Jiduocai, Shenzhen, Guangdong 518129 (CN); YANG, Haiquan, Shenzhen, Guangdong 518129 (CN)
(74) Representative: Gill Jennings & Every LLP
(86) International application number: PCT/CN2023/072355
(87) International publication number: WO 2024/152148

(57) **Abstract**

Embodiments of this application disclose a device rescue method, and the device rescue method may be applied to a scenario like vehicle rescue. The method includes: After a vehicle fails to be updated, the vehicle sends, to a server, first information that includes update failure information of a plurality of components, and then receives, from the server, second information for triggering a rescue update task, where the rescue update task is related to a to-be-re-updated target component in the plurality of components. Further, the vehicle executes a strategy corresponding to the rescue update task and re-updates the target component, where the strategy is used to limit driving of the vehicle. The server may automatically determine the to-be-re-updated target component based on the update failure information reported by the vehicle. **In** addition, the vehicle automatically executes the strategy corresponding to the rescue update task and re-updates the target component in time, so that problems of vehicle power loss, battery overdischarge, and the like caused by an update failure can be reduced.

## Description

### TECHNICAL FIELD

Embodiments of this application relate to the field of communication technologies, and in particular, to a device rescue method and a related device.

### BACKGROUND

With the development of autonomous driving, people require increasingly high computing and control capabilities of vehicles. More functions are provided for users in a form of software. Therefore, software-defined vehicles are becoming an important trend of vehicle development.

Currently, a vehicle with software to be installed or updated needs to be connected to a cloud by using an over the air (over the air, OTA) technology. Each time the vehicle sends an update request to an OTA server, the OTA server responds to the update request of the vehicle, and delivers a vehicle update package to the vehicle. Further, the vehicle performs OTA update. If the OTA update of the vehicle fails, the technical personnel analyze a cause of the update failure, create an update task, and re-update the vehicle based on the update task.

However, because a time at which the technical personnel create the update task is uncertain, hours may have passed since the OTA update of the vehicle fails, resulting in problems of power loss, battery overdischarge, and the like of the vehicle.

### SUMMARY

Embodiments of this application provide a device rescue method and a related device, so that problems of vehicle power loss, battery overdischarge, and the like caused by an update failure can be reduced.

A first aspect of embodiments of this application provides a device rescue method, and the device rescue method may be applied to a scenario like vehicle rescue. The method may be performed by a first terminal device, or may be performed by a component (for example, a processor, a chip, or a chip system) of a first terminal device. The first terminal device may be specifically a device like a vehicle or a robot. The method includes: sending first information to a server, where the first information includes update failure information of a plurality of components in the first terminal device; receiving second information from the server, where the second information is used to trigger a rescue update task of the first terminal device, and the rescue update task is related to a to-be-re-updated target component in the plurality of components; executing a strategy corresponding to the rescue update task, where the strategy is used to limit driving of the first terminal device; and re-updating the target component.

In this embodiment of this application, after a vehicle fails to be updated, the vehicle sends the update failure information of the plurality of components to the server, and then receives, from the server, second information for triggering the rescue update task, where the rescue update task is related to the to-be-re-updated target component in the plurality of components. Further, the vehicle executes the strategy corresponding to the rescue update task and re-updates the target component, where the strategy is used to limit driving of the vehicle. The server may automatically determine the to-be-re-updated target component based on the update failure information reported by the vehicle. In addition, the vehicle automatically executes the strategy corresponding to the rescue update task and re-updates the target component in time, so that problems of vehicle power loss, battery overdischarge, and the like caused by an update failure can be reduced.

Optionally, in a possible implementation of the first aspect, the strategy includes at least one of the following: performing a high-voltage tum-off operation and ignoring a precondition check on the first terminal device. The precondition includes at least one of the following: a power check of the first terminal device and a power supply check of the terminal device.

In this possible implementation, the high-voltage turn-off operation is performed, to prevent a driving action of a driver in an update process; and the power check and the power supply check of the vehicle are ignored, to quickly enter a re-update phase, so that a rate of performing update flashing is improved.

Optionally, in a possible implementation of the first aspect, the target component includes at least one of the following: a power component of the first terminal device and a power supply component of the first terminal device.

In this possible implementation, a key signal related to the power or the power supply after the update fails is re-updated, to ensure normal power or power supply of the vehicle.

Optionally, in a possible implementation of the first aspect, after the foregoing step of re-updating the target component, the method further includes: sending third information to the server, where the third information indicates that the target component is successfully updated.

In this possible implementation, after the re-update succeeds, update success information is fed back to the server. The server may notify a user, and the server may record update information of the vehicle.

A second aspect of embodiments of this application provides a device rescue method, and the device rescue method may be applied to a scenario like vehicle rescue. The method may be performed by a server, or may be performed by a component (for example, a processor, a chip, or a chip system) of a server. The server may be specifically a device like an OTA server. The method includes: receiving first information from a first terminal device, where the first information includes update failure information of a plurality of components in the first terminal device; determining a to-be-re-updated target component in the plurality of components based on the first information; determining a rescue update task of the target component; and sending second information to the first terminal device, where the second information is used to trigger the first terminal device to execute a strategy corresponding to the rescue update task, and the strategy is used to limit driving of the first terminal device.

In this embodiment of this application, after a vehicle fails to be updated, the server receives the update failure information of the plurality of components sent by the vehicle, and determines the rescue update task based on actual failure information, where the rescue update task is related to the to-be-re-updated target component in the plurality of components. Further, the vehicle executes the strategy corresponding to the rescue update task and re-updates the target component, where the strategy is used to limit driving of the vehicle. The server may automatically determine the to-be-re-updated target component based on the update failure information reported by the vehicle. In addition, the vehicle automatically executes the strategy corresponding to the rescue update task and re-updates the target component in time, so that problems of vehicle power loss, battery overdischarge, and the like caused by an update failure can be reduced.

Optionally, in a possible implementation of the second aspect, before the foregoing step of determining a rescue update task of the target component, the method further includes: determining an update failure level of the target component. The determining a rescue update task of the target component includes: if a preset condition is met, determining the rescue update task based on the update failure level, where the preset condition includes that the update failure level is a target level.

In this possible implementation, whether to deliver the rescue update task may be determined based on the update failure level, so that an entire process is automatically implemented, and the vehicle is quickly rescued.

Optionally, in a possible implementation of the second aspect, the preset condition further includes that the target component includes at least one of the following: a power component of the first terminal device and a power supply component of the first terminal device.

In this possible implementation, whether to deliver the rescue update task may be further determined based on whether the target component is a key component related to power and/or power supply.

Optionally, in a possible implementation of the second aspect, after the foregoing step of sending second information to the first terminal device, the method further includes: receiving third information from the first terminal device, where the third information indicates that the target component is successfully updated.

In this possible implementation, after the re-update succeeds, the server receives update success information fed back by the vehicle. The server may notify a user, and the server may record update information of the vehicle.

Optionally, in a possible implementation of the second aspect, before the foregoing step of determining a rescue update task of the target component in the plurality of components based on the first information, the method further includes: sending first prompt information to a second terminal device, where the first prompt information indicates that the server plans to deliver the rescue update task to the second terminal device. After the receiving third information from the first terminal device, the method further includes: sending second prompt information to the second terminal device, where the second prompt information indicates that the first terminal device is successfully updated.

In this possible implementation, the second prompt information is sent to the second terminal, so that the user knows automatic rescue, and is not worried about whether the user can normally drive when the update fails.

Optionally, in a possible implementation of the second aspect, before the foregoing step of determining a rescue update task of the target component in the plurality of components based on the first information, the method further includes: receiving enabling information from the second terminal device, where the enabling information is used by a user to determine to enable a function of the rescue update task.

In this possible implementation, the user may enable an "automatic rescue upon update failure" function by performing an operation on a central control screen on the vehicle or an application on a mobile phone, and perform vehicle rescue based on the strategy corresponding to the rescue update task after OTA update fails.

A third aspect of embodiments of this application provides a first terminal device, and the first terminal device may be applied to a scenario like vehicle rescue. The first terminal device includes: a sending unit, configured to send first information to a server, where the first information includes update failure information of a plurality of components in the first terminal device; a receiving unit, configured to receive second information from the server, where the second information is used to trigger a rescue update task of the first terminal device, and the rescue update task is related to a to-be-re-updated target component in the plurality of components; and a processing unit, configured to execute a strategy corresponding to the rescue update task, where the strategy is used to limit driving of the first terminal device. The processing unit is further configured to re-update the target component.

Optionally, in a possible implementation of the third aspect, the strategy includes at least one of the following: performing a high-voltage turn-off operation and ignoring a precondition check on the first terminal device. The precondition includes at least one of the following: a power check of the first terminal device and a power supply check of the terminal device.

Optionally, in a possible implementation of the third aspect, the target component includes at least one of the following: a power component of the first terminal device and a power supply component of the first terminal device.

Optionally, in a possible implementation of the third aspect, the sending unit is further configured to send third information to the server, where the third information indicates that the target component is successfully updated.

A fourth aspect of embodiments of this application provides a server, and the server may be applied to a scenario like vehicle rescue. The server includes: a receiving unit, configured to receive first information from a first terminal device, where the first information includes update failure information of a plurality of components in the first terminal device; a processing unit, configured to determine a to-be-re-updated target component in the plurality of components based on the first information, where the processing unit is further configured to determine a rescue update task of the target component; and a sending unit, configured to send second information to the first terminal device, where the second information is used to trigger the first terminal device to execute a strategy corresponding to the rescue update task, and the strategy is used to limit driving of the first terminal device.

Optionally, in a possible implementation of the fourth aspect, the processing unit is further configured to determine an update failure level of the target component. The processing unit is specifically configured to: if a preset condition is met, determine the rescue update task based on the update failure level, where the preset condition includes that the update failure level is a target level.

Optionally, in a possible implementation of the fourth aspect, the preset condition further includes that the target component includes at least one of the following: a power component of the first terminal device and a power supply component of the first terminal device.

Optionally, in a possible implementation of the fourth aspect, the receiving unit is further configured to receive third information from the first terminal device, where the third information indicates that the target component is successfully updated.

Optionally, in a possible implementation of the fourth aspect, the sending unit is further configured to send first prompt information to a second terminal device, where the first prompt information indicates that the server plans to deliver the rescue update task to the second terminal device. The sending unit is further configured to send second prompt information to the second terminal device, where the second prompt information indicates that the first terminal device is successfully updated.

Optionally, in a possible implementation of the fourth aspect, the receiving unit is further configured to receive enabling information from the second terminal device, where the enabling information is used by a user to determine to enable a function of the rescue update task.

A fifth aspect of embodiments of this application provides a first terminal device, including a processor. The processor is coupled to a memory. The memory is configured to store a program or instructions. When the program or the instructions are executed by the processor, the first terminal device is enabled to perform the method according to any one of the first aspect or the possible implementations of the first aspect.

A sixth aspect of embodiments of this application provides a server, including a processor. The processor is coupled to a memory. The memory is configured to store a program or instructions. When the program or the instructions are executed by the processor, the server is enabled to perform the method according to any one of the second aspect or the possible implementations of the second aspect.

A seventh aspect of embodiments of this application provides a communication system, including the communication device in the fifth aspect and/or the communication device in the sixth aspect.

An eighth aspect of embodiments of this application provides a vehicle, including the first terminal device according to any one of the second aspect or the possible implementations of the second aspect.

A ninth aspect of embodiments of this application provides a computer-readable medium. The computer-readable medium stores a computer program or instructions. When the computer program or the instructions runs/run on a computer, the computer is enabled to perform the method according to any one of the first aspect or the possible implementations of the first aspect, or the computer is enabled to perform the method according to any one of the second aspect or the possible implementations of the second aspect.

A tenth aspect of embodiments of this application provides a computer program product. When the computer program product is executed on a computer, the computer is enabled to perform the method according to any one of the first aspect or the possible implementations of the first aspect, or the computer is enabled to perform the method according to any one of the second aspect or the possible implementations of the second aspect.

It can be learned from the foregoing technical solutions that embodiments of this application have the following advantages: After the vehicle fails to be updated, the vehicle sends the update failure information of the plurality of components to the server, and then receives, from the server, the second information for triggering the rescue update task, where the rescue update task is related to the to-be-re-updated target component in the plurality of components. Further, the vehicle executes the strategy corresponding to the rescue update task and re-updates the target component, where the strategy is used to limit driving of the vehicle. The server may automatically determine the to-be-re-updated target component based on the update failure information reported by the vehicle. In addition, the vehicle automatically executes the strategy corresponding to the rescue update task and re-updates the target component in time, so that problems of vehicle power loss, battery overdischarge, and the like caused by an update failure can be reduced.

### BRIEF DESCRIPTION OF DRAWINGS

FIG. 1 is a diagram of a structure of a network architecture according to an embodiment of this application;
FIG. 2 is a diagram of another structure of a network architecture according to an embodiment of this application;
FIG. 3 is a schematic flowchart of a device rescue method according to an embodiment of this application;
FIG. 4 is another schematic flowchart of a device rescue method according to an embodiment of this application;
FIG. 5 is an example diagram of an application scenario according to an embodiment of this application;
FIG. 6 is an example diagram of an interface of a central control screen according to an embodiment of this application;
FIG. 7 is an example diagram of interaction between a user and a vehicle central control according to an embodiment of this application;
FIG. 8 is an example diagram of interaction between a user and an application on a mobile phone according to an embodiment of this application;
FIG. 9 is a diagram of a structure of a first terminal device according to an embodiment of this application;
FIG. 10 is a diagram of a structure of a server according to an embodiment of this application; and
FIG. 11 is a diagram of another structure of a server according to an embodiment of this application.

### DESCRIPTION OF EMBODIMENTS

Embodiments of this application provide a device rescue method and a related device. A server may automatically determine, based on update failure information reported by a vehicle, a to-be-re-updated target component. In addition, the vehicle automatically executes a strategy corresponding to a rescue update task and re-updates the target component in time, so that problems of vehicle power loss, battery overdischarge, and the like caused by an update failure can be reduced.

The following describes the technical solutions in embodiments of the present invention with reference to the accompanying drawings in embodiments of the present invention. It is clear that the described embodiments are merely a part rather than all of embodiments of the present invention. All other embodiments obtained by technical personnel in the art based on embodiments of the present invention without creative efforts shall fall within the protection scope of the present invention. In addition, in embodiments of this application, the terms "first", "second", "third", "fourth" and so on are intended to distinguish between different objects but do not indicate a particular order. In addition, the terms "including" and "having" and any other variants thereof are intended to cover a non-exclusive inclusion. For example, a process, a method, a system, a product, or a device that includes a series of steps or units is not limited to the listed steps or units, but optionally further includes unlisted steps or units, or optionally further includes other inherent steps or units of the process, the method, the product, or the device.

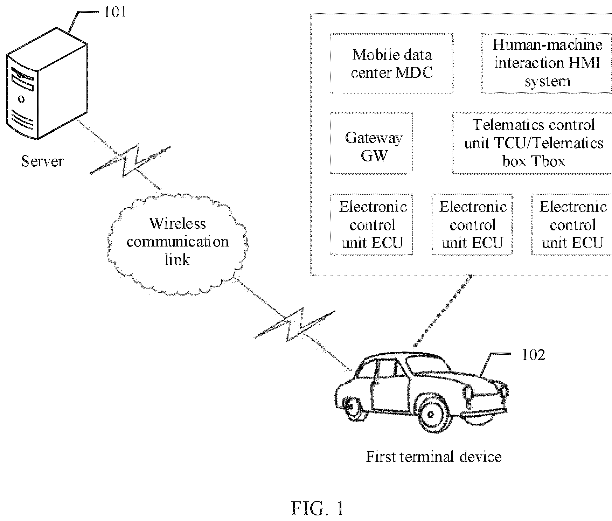

For ease of understanding of this solution, a network architecture provided in an embodiment of this application is first described with reference to FIG. 1 in embodiments of this application. As shown in FIG. 1, the network architecture includes a server 101 and a first terminal device 102.

The server 101 communicates with the first terminal device 102 through a wireless communication link. The wireless communication link may be a mobile communication network (for example, a 2G/3G/4G/5G/6G network), or may be a wireless local area network (Wireless local area network, WLAN), or the like. The wireless communication link is not limited in this embodiment of this application.

The server 101 may be an over-the-air (Over the Air, OTA) server. The OTA server may be deployed on an electronic device having a wireless communication function and a storage function, or may be deployed on a virtual machine (Virtual Machine, VM) or a container on a cloud, where the cloud may be a cluster including a plurality of electronic devices.

In this embodiment of this application, an example in which the first terminal device 102 is only a vehicle (for example, a car, a truck, a motorcycle, a bus, a playground vehicle, an entertainment vehicle, a trolley, a golf cart, or the like) is used for description. It may be understood that, in actual application, the first terminal device may alternatively be a robot, a boat, a lawn mower, a construction device, or the like. This is not specifically limited herein.

The network architecture is mainly used for software update at a vehicle end. This process mainly includes: Update software is first uploaded to the OTA center, the OTA center transmits the update software to the vehicle end in a wireless manner, and the vehicle end automatically updates the software.

Optionally, the first terminal device 102 includes at least one of the following components: a gateway (GateWay, GW), a mobile data center (Mobile Data Center, MDC), a human-machine interaction (Human-Machine Interaction, HMI) system, a telematics control unit (Telematics Control Unit, TCU), a telematics box (Telematics box, Tbox), an electronic control unit (Electronic Control Unit, ECU), and the like.

The GW is a core component in an electronic and electrical architecture of an entire vehicle, serves as a data exchange hub of an entire vehicle network, and may route network data such as a controller area network (Controller Area Network, CAN), a local interconnect network (Local Interconnect Network, LIN), and a multimedia software update (Media Oriented System Transport, MOST) network in different networks. The MDC is an intelligent in-vehicle computing platform of a vehicle. The MDC may be configured to implement an autonomous driving function of the vehicle. The HMI is an information entertainment system of a vehicle. The TCU and the Tbox are mainly configured to communicate with an external device (for example, a mobile phone or a background system) of a vehicle. The ECU is a vehicle-specific microcomputer controller. The ECU includes but is not limited to a vehicle integrated/integration unit (Vehicle Integrated/Intergration Unit, VIU), a cockpit domain controller (Cockpit Domain Controller, CDC), and a vehicle domain controller (Vehicle Domain Controller, VDC).

Optionally, the Tbox includes a microprocessor unit (Microprocessor Unit, MPU) and a microcontroller unit (Microcontroller Unit, MCU) at an application layer. The MPU is mainly configured to implement an application function, and the MCU is mainly configured to control power management and access a vehicle CAN bus. The MPU and MCU can communicate with each other through a general purpose input/output (General Purpose Input/Output, GPIO) interface and serial peripheral interface (Serial Peripheral Interface, SPI).

It can be understood that the structure illustrated in this embodiment of this application does not constitute a specific limitation on the first terminal device 102. In some other embodiments of this application, the first terminal device 102 may include more or fewer components than those shown in the figure, or a combination of some components, or splits from some components, or a different component layout. The components shown in the figure may be implemented by using hardware, software, or a combination of software and hardware. For example, the first terminal device 102 may further include at least one of the following: a battery management system (Battery Management System, BMS), a vehicle control unit (Vehicle control unit, VCU), a body control module (body control module, BCM), a direct current-direct current (direct current-direct current, DCDC) module, an electronic stability controller (Electronic Stability Controller, ESC), a global system for mobile communications (global system for mobile communications, GSM), a generator control unit (generator control unit, GCU), an in-vehicle infotainment (In-Vehicle Infotainment, IVI) system, an instrument controller (instrument controller, IC), and the like.

In addition, the network architecture in this embodiment of this application may include more servers, first terminal devices, and/or other devices. This is not specifically limited herein.

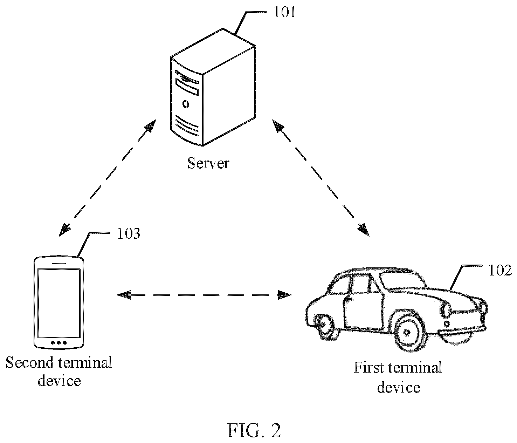

For example, as shown in FIG. 2, the network architecture may further include a second terminal device 103. A user may manage the first terminal device 102 via the second terminal device 103. For example, the user performs update processing on the first terminal device 102 via the second terminal device 103. For another example, the user sends an update request to the server 101 via the second terminal device 103, where the update request is used to update software in the first terminal device 102. For another example, the user receives an update result from the server 101 via the second terminal device 103, where the update result indicates whether software in the first terminal device 102 is successfully updated, and the like.

Currently, when software in a vehicle needs to be installed or updated, the software in the vehicle may be installed or updated by connecting to a cloud through the OTA. Each time the vehicle sends an update request to the OTA server, the OTA server responds to the update request of the vehicle, and delivers a vehicle update package to the vehicle. Further, the vehicle performs OTA update. If the OTA update of the vehicle fails, the technical personnel analyze a cause of the update failure, create an update task, and re-update the vehicle based on the update task.

However, because a time at which the technical personnel create an update task is uncertain, hours may have passed since the OTA update of the vehicle fails, resulting in problems of power loss, battery overdischarge, and the like of the vehicle.

To resolve the foregoing problems, embodiments of this application provide a device rescue method and a related device. After a vehicle fails to be updated, the vehicle sends update failure information of a plurality of components to a server, and then receives, from the server, second information for triggering a rescue update task, where the rescue update task is related to a to-be-re-updated target component in the plurality of components. Further, the vehicle executes a strategy corresponding to the rescue update task and re-updates the target component, where the strategy is used to limit driving of the vehicle. The server may automatically determine the to-be-re-updated target component based on the update failure information reported by the vehicle. In addition, the vehicle automatically executes the strategy corresponding to the rescue update task and re-updates the target component in time, so that problems of vehicle power loss, battery overdischarge, and the like caused by an update failure can be reduced.

The following describes in detail the device rescue method provided in embodiments of this application with reference to the accompanying drawings. The method may be applied to a vehicle OTA update scenario, a vehicle rescue scenario, and the like.

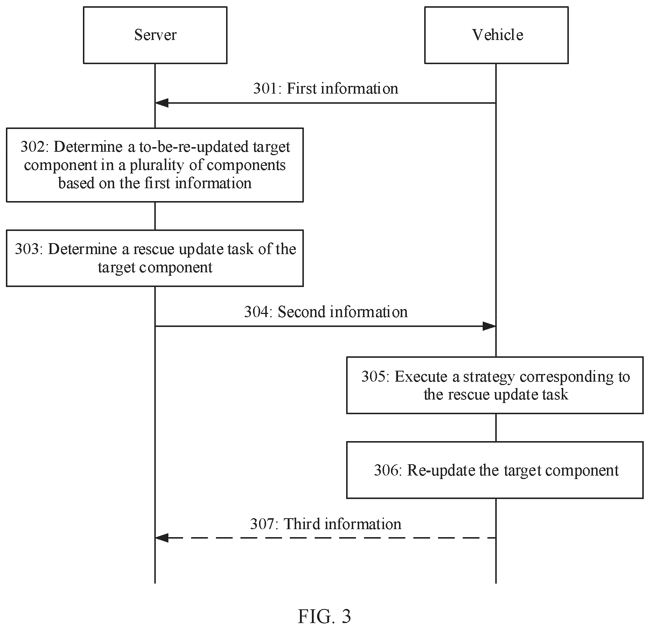

FIG. 3 shows an embodiment of a device rescue method provided in an embodiment of this application. The method may be performed by a communication device, or may be performed by a component (for example, a processor, a chip, or a chip system) of a communication device. The communication device may include the server 101 shown in FIG. 1, or may be the first terminal device 102 shown in FIG. 1, or may include the server 101 and the first terminal device 102 shown in FIG. 1 (that is, the first terminal device and the server jointly perform the method). The method includes step 301 to step 307. The following uses an example in which the first terminal device is a vehicle to describe step 301 to step 307.

Step 301: The vehicle sends first information to a server.

After the vehicle fails to perform software update, the vehicle sends the first information to the server. Correspondingly, the server receives the first information from the vehicle. The first information includes update failure information of a plurality of components in the vehicle.

There are a plurality of cases of the first information in this embodiment of this application. The first information may be an update log of the vehicle, or may be indication information indicating that the plurality of components fail to be updated, or may indicate a component that fails to be updated and a component that is successfully updated, or the like. This is not specifically limited herein.

The components in this embodiment of this application are the GW, the MDC, the HMI, the TCU, T-box, the ECU, the BMS, the VCU, the BCM, the DCDC module, the ESC, the GSM, the GCU, the IVI, the IC, and the like shown in FIG. 1.

It may be understood that the vehicle may directly communicate with the server, or the vehicle may indirectly communicate with the server through one or more intermediate devices. This is not specifically limited herein.

Step 302: The server determines a to-be-re-updated target component in the plurality of components based on the first information.

After receiving the first information from the vehicle, the server determines the to-be-re-updated target component in the plurality of components based on the first information.

In a possible implementation, the server determines, as the target component, a component that fails to be updated.

In another possible implementation, the server determines, as the target component, a key component that fails to be updated. The key component may be understood as a component related to power and/or power supply of the vehicle, for example, the BMS and the VCU.

Optionally, when the first information is the update log, after receiving the update log reported by the vehicle, the server analyzes update failure statuses of the plurality of components in the update log, and determines a component, as the target component, that fails to be updated in the plurality of components. The component that fails to be updated may alternatively be understood as the to-be-re-updated target component.

Optionally, the target component may alternatively be understood as a component whose update failure level is a target level, or may be understood as a key component. The target level is described in detail in subsequent step 303, and details are not described herein again.

Step 303: The server determines a rescue update task of the target component.

After determining the to-be-re-updated target component, the server further determines the rescue update task of the target component. It may alternatively be understood that the rescue update task is related to the to-be-re-updated target component in the plurality of components.

Optionally, after determining the target component, the server first determines an update failure level of the target component, and then determines the rescue update task based on the update failure level of the target component.

Optionally, there may be a plurality of update failure levels, and a level may alternatively be understood as a severity. If a preset condition is met, the rescue update task corresponding to the target component is determined. Alternatively, it is understood that if a preset condition is met, the rescue update task corresponding to the target component is started. The preset condition is related to an update failure level. Specifically, if a failure level is the target level, it is determined to start the rescue update task of the target component. The level is related to failure information of a component. The failure information includes at least one of the following: a failure category of the component, a flashing failure phase of the component, and impact brought by the flashing failure phase of the component.

Further, the preset condition may further include: a component that fails to be updated is a power component, a power supply component, and/or the like of the vehicle.

For example, step 302 and step 303 may alternatively be considered as an overall determining process. Specifically, the server determines, based on an OTA update failure grading table and/or a key component and rescue configuration table, whether to start the rescue update task. In other words, the server may determine, based on the following Table 1, whether to start the rescue update task, or may determine, based on Table 2, whether to start the rescue update task, or may determine, based on Table 1 and Table 2, whether to start the rescue update task (for example, first determine an update failure level based on Table 1, and then determine, based on Table 2, whether remote rescue is required). This is not specifically limited herein.

For example, that the preset condition includes the power component is used as an example. OTA update failure grading of the vehicle is shown in Table 1.

**Table 1**

| Severity | Failure category | Whether rescue is required |
|---|---|---|
| Level 1 | 1. A precondition check is not passed, and formal flashing is not started | No |
| | 2. Update succeeds, but OTA fails to be exited | No |
| Level 2 | Update fails, but vehicle rollback succeeds | No |
| Level 3 | Update fails, and rollback fails, but all components can be started normally | No |
| Level 4 | Non-power-related components fail to be flashed and cannot start | No |
| **Level 5** | Power-related components fail to be flashed and cannot start | Yes |
| Level 6 | Update causes overdischarge and the update is not completed | No |

The target level in the example in Table 1 is the level 5. The precondition is related to a power check and/or a power supply check of the vehicle. For example, the precondition includes at least one of the following: a P gear check of a vehicle gear, a vehicle speed check, and an electronic parking brake (Electrical Parking Brake, EPB) status. Rollback may alternatively be understood as flashing. The level 6 corresponds to that long duration in the flashing failure phase may be set based on an actual requirement, for example, more than 3 hours. That rescue is required may alternatively be understood as that the vehicle needs to execute a strategy corresponding to rescue. The strategy is described in detail in subsequent step 305, and details are not described herein again.

It may be understood that Table 1 is merely an example of OTA update failure grading of the vehicle. In actual application, there may be another manner in a grading process of an update failure. This is not specifically limited herein.

For example, the key component and rescue configuration table are shown in Table 2.

**Table 2**

| Component that fails to be updated | Impact of an update failure | | | Whether rescue is required |
|---|---|---|---|---|
| | Unable to drive | Unable to power on | Unable to sleep | |
| **BMS** | √ | √ | √ | **Yes** |
| **VCU** | √ | √ | √ | **Yes** |
| **BCM** | √ | √ | √ | **Yes** |
| **DCDC** | √ | √ | | **Yes** |
| **ESC** | √ | | | **Yes** |
| **GSM** | √ | | | **Yes** |
| GCU | | | | No |
| MCU | | | | No |
| **GW** | √ | √ | √ | **Yes** |
| Tbox | | | | No |
| IVI | | | | No |
| IC | | | | No |
| Another ECU | | | | No |

The BMS, the VCU, the BCM, the DCDC, the ESC, the GSM and the GW may alternatively be understood as key components.

It may be understood that Table 2 is merely an example of the key component and rescue configuration table. In actual application, the key component and rescue configuration table may alternatively be in another form. This is not specifically limited herein.

Step 304: The server sends second information to the vehicle.

After determining the rescue update task, the server sends the second information to the vehicle. Correspondingly, the vehicle receives the second information from the server. The second information is used to trigger the rescue update task of the vehicle, or is used to trigger the vehicle to execute a strategy corresponding to the rescue update task, where the strategy is used to limit driving of the vehicle.

Step 305: The vehicle executes the strategy corresponding to the rescue update task.

After receiving the second information from the server, the vehicle executes the strategy of the rescue update task. This strategy is used to limit driving of the vehicle.

Optionally, the strategy includes at least one of the following: performing a high-voltage turn-off operation and ignoring a precondition check on the vehicle.

Step 306: The vehicle re-updates the target component.

After receiving the second information from the server, the vehicle re-updates the target component.

Optionally, step 305 and step 306 may be understood as follows: After determining that a remote rescue task is received, the vehicle executes a strategy based on the rescue task. Specifically, if the vehicle is in a high-voltage state, a high-voltage turn-off operation is performed to prevent a driving action in an update process; and check of a P gear, a vehicle speed, and an EPB status, and a requirement for entering an OTA mode are ignored, and update flashing is directly performed.

Step 307: The vehicle sends third information to the server. This step is optional.

Optionally, after re-updating the target component, the vehicle sends the third information to the server. Correspondingly, the server receives the third information from the vehicle. The third information indicates that the target component is successfully updated, or indicates that the vehicle is successfully updated.

In this embodiment of this application, after the vehicle fails to be updated, the vehicle sends the update failure information of the plurality of components to the server, and then receives, from the server, the second information for triggering the rescue update task, where the rescue update task is related to the to-be-re-updated target component in the plurality of components. Further, the vehicle executes the strategy corresponding to the rescue update task and re-updates the target component, where the strategy is used to limit driving of the vehicle. The server may automatically determine the to-be-re-updated target component based on the update failure information reported by the vehicle. In addition, the vehicle automatically executes the strategy corresponding to the rescue update task and re-updates the target component in time, so that problems of vehicle power loss, battery overdischarge, and the like caused by an update failure can be reduced.

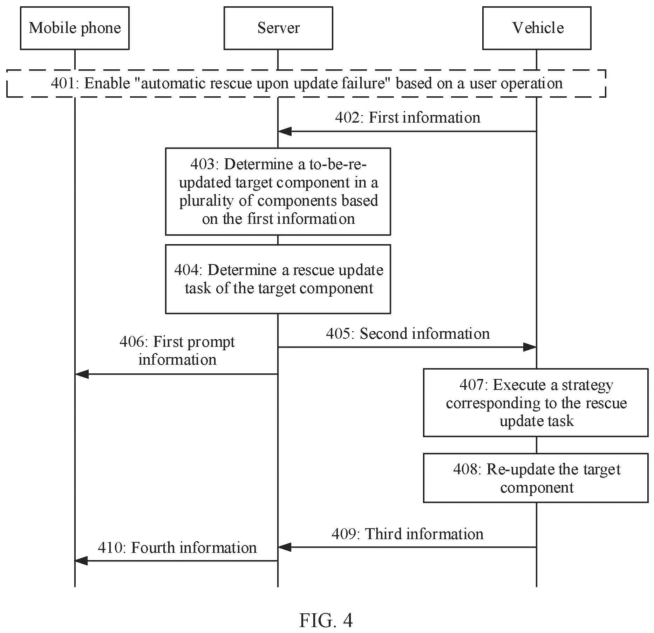

In addition, the method provided in this embodiment of this application may alternatively be implemented based on a related operation of a user. The following describes a device rescue method in which a user participates with reference to FIG. 4. This process includes step 401 to step 410. The following describes step 401 to step 410 in detail.

Step 401: "Automatic rescue upon update failure" is enabled based on a user operation. This step is optional.

Optionally, a vehicle determines, based on the user operation, to enable an "automatic rescue upon update failure" function. This function is used to trigger subsequent processes. The function may be specifically used to trigger at least one of the following steps: delivering a rescue update task of a server, executing a strategy corresponding to the rescue update task by the vehicle, re-updating a target component, reporting a re-update success, and the like.

In this embodiment of this application, the user may enable the "automatic rescue upon update failure" function through a central control screen of the vehicle. The user may alternatively enable the "automatic rescue upon update failure" function or the like through an application on a mobile phone. This is not specifically limited herein.

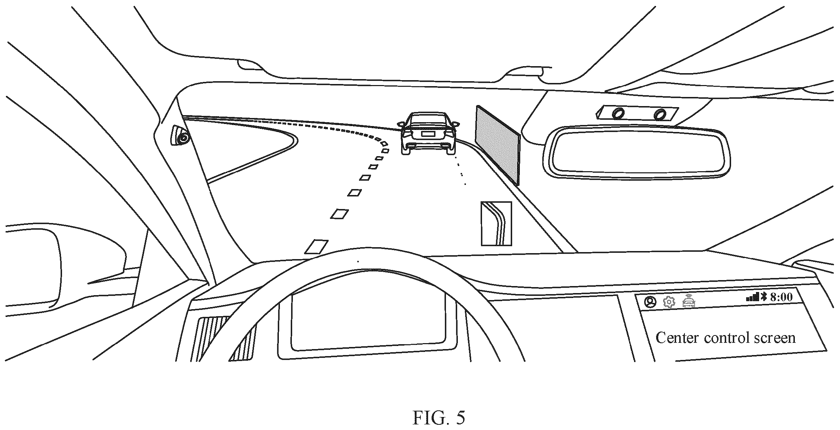

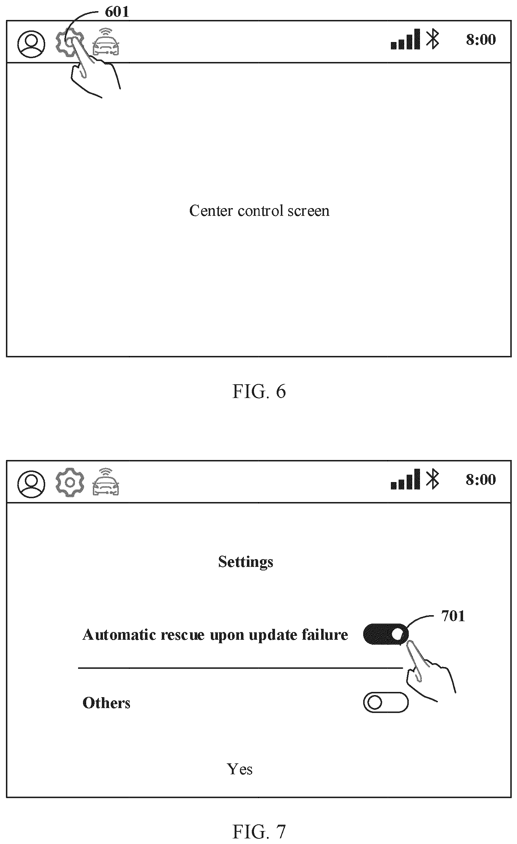

For example, the user enables the "automatic rescue upon update failure" function through the central control screen of the vehicle. As shown in FIG. 5, an application scenario of this example is on the central control screen of the vehicle. The central control screen is shown in FIG. 6. The central control screen of the vehicle may respond to a first operation 601 of the user, and display a setting interface shown in FIG. 7. Further, the user may enable the "automatic rescue upon update failure" function through a second operation 701. The first operation 601 may be an operation performed by the user by tapping settings on the central control screen, and the second operation 702 may be an operation performed by the user by tapping an enable button of the "automatic rescue upon update failure" function. It may be understood that the foregoing operations are merely examples. In actual application, the "automatic rescue upon update failure" function may be enabled through a voice, a physical button, or the like.

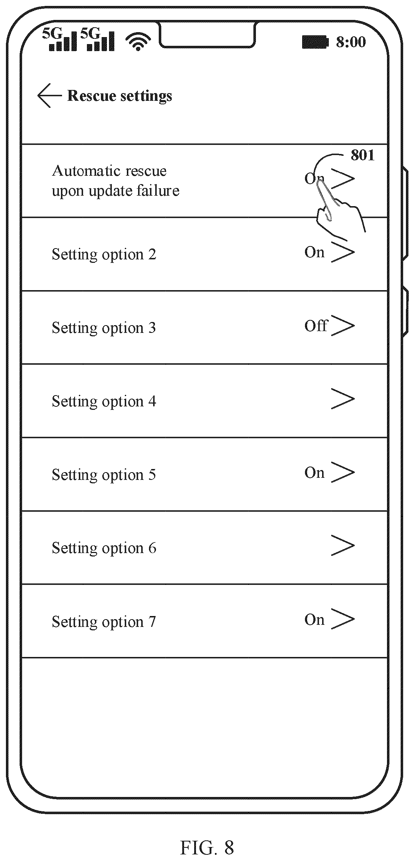

For example, the user enables the "automatic rescue upon update failure" function through the application on the mobile phone. The mobile phone responds to the operation of the user, and displays a rescue setting interface shown in FIG. 8. Further, the user may enable the "automatic rescue upon update failure" function through a third operation 801.

Step 402: The vehicle sends first information to the server.

Step 403: The server determines a to-be-re-updated target component in a plurality of components based on the first information.

Step 404: The server determines a rescue update task of the target component.

Step 405: The server sends second information to the vehicle.

Step 402 to step 405 in this embodiment of this application are similar to step 301 to step 304 in the foregoing embodiment, and details are not described herein again.

Step 406: The server sends first prompt information to the mobile phone.

After determining the rescue update task of the target component, the server sends the first prompt information to the mobile phone. The first prompt information prompts the user that automatic rescue update is to be performed on the vehicle.

Optionally, because the user already determines to enable the "automatic rescue upon update failure" function in step 401, the user may not need to perform a determining operation in this step. Certainly, if step 401 does not exist, the first prompt information in this step may be used by the user to determine to enable the "automatic rescue upon update failure" function.

Step 407: The vehicle executes the strategy corresponding to the rescue update task.

Step 408: The vehicle re-updates the target component.

Step 409: The vehicle sends third information to the server.

Step 407 to step 409 in this embodiment of this application are similar to step 305 to step 307 in the foregoing embodiment, and details are not described herein again.

Step 410: The server sends fourth information to the mobile phone.

After determining that the vehicle is successfully re-updated, the server sends the fourth information to the mobile phone. Correspondingly, the mobile phone receives the fourth information sent by the server. The fourth information prompts the user that the vehicle is successfully re-updated.

In addition, there is no time sequence relationship between steps in this embodiment of this application. For example, step 406 may be performed before step 405. Step 401 may be performed after step 404, or the like. This is not specifically limited herein.

In this embodiment of this application, the user may enable the "automatic rescue upon update failure" function by performing an operation on the central control screen on the vehicle or the application on the mobile phone, and perform vehicle rescue based on the strategy corresponding to the rescue update task after OTA update fails. In addition, the user knows automatic rescue, and is not worried about whether the user can normally drive when the update fails. In addition, the server automatically and accurately identifies a key component that fails to be updated and automatically delivers a rescue update task within several minutes after an update failure. This prevents battery overdischarge and driving failure caused by the update failure of the key component. A rescue task scenario identification function is added to the vehicle, and an update precondition determining strategy is optimized, so that update and installation can be performed after a rescue task is received. This prevents battery overdischarge and driving failure caused by the update failure of the key component.

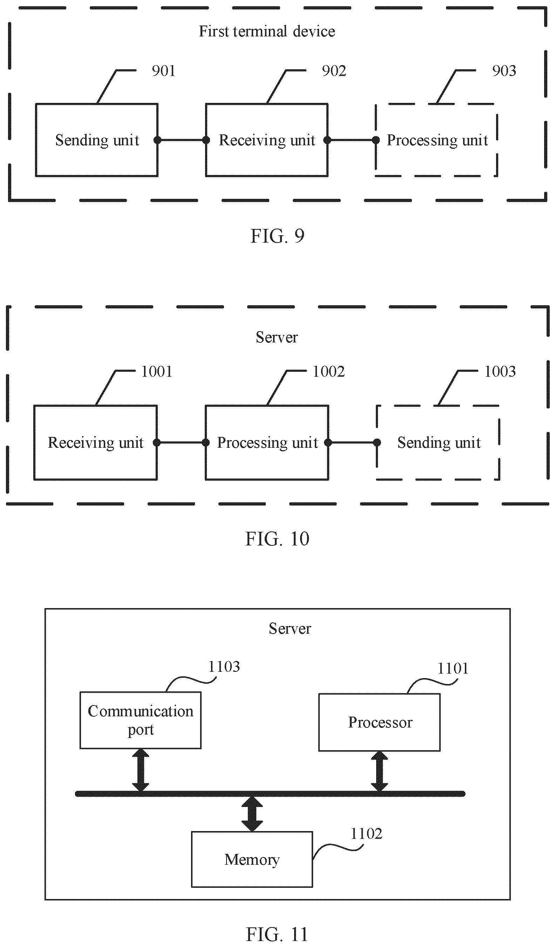

The foregoing describes the device rescue method in embodiments of this application. The following describes a device in embodiments of this application. With reference to FIG. 9, an embodiment of a first terminal device in embodiments of this application includes:
a sending unit 901, configured to send first information to a server, where the first information includes update failure information of a plurality of components in the first terminal device;
a receiving unit 902, configured to receive second information from the server, where the second information is used to trigger a rescue update task of the first terminal device, and the rescue update task is related to a to-be-re-updated target component in the plurality of components; and
a processing unit 903, configured to execute a strategy corresponding to the rescue update task, where the strategy is used to limit driving of the first terminal device.

The processing unit 903 is further configured to re-update the target component.

Optionally, the strategy includes at least one of the following: performing a high-voltage turn-off operation and ignoring a precondition check on the first terminal device. The precondition includes at least one of the following: a power check of the first terminal device and a power supply check of the terminal device.

Optionally, the target component includes at least one of the following: a power component of the first terminal device and a power supply component of the first terminal device.

Optionally, the sending unit 901 is further configured to send third information to the server, where the third information indicates that the target component is successfully updated.

In this embodiment, operations performed by units in the first terminal device are similar to those described in the embodiments shown in FIG. 1 to FIG. 8. Details are not described herein again.

In this embodiment, after a vehicle fails to be updated, the sending unit 901 sends the update failure information of the plurality of components to the server, and then the receiving unit 902 receives, from the server, the second information for triggering the rescue update task, where the rescue update task is related to the to-be-re-updated target component in the plurality of components. Further, the vehicle executes the strategy corresponding to the rescue update task and re-updates the target component, where the strategy is used to limit driving of the vehicle. The server may automatically determine the to-be-re-updated target component based on the update failure information reported by the vehicle. In addition, the vehicle automatically executes the strategy corresponding to the rescue update task and re-updates the target component in time, so that problems of vehicle power loss, battery overdischarge, and the like caused by an update failure can be reduced.

With reference to FIG. 10, an embodiment of a server in embodiments of this application includes:
a receiving unit 1001, configured to receive first information from a first terminal device, where the first information includes update failure information of a plurality of components in the first terminal device;
a processing unit 1002, configured to determine a to-be-re-updated target component in the plurality of components based on the first information, where
the processing unit 1002 is further configured to determine a rescue update task of the target component; and
a sending unit 1003, configured to send second information to the first terminal device, where the second information is used to trigger the first terminal device to execute a strategy corresponding to the rescue update task, and the strategy is used to limit driving of the first terminal device.

Optionally, the processing unit 1002 is further configured to determine an update failure level of the target component. The processing unit 1002 is specifically configured to: if a preset condition is met, determine the rescue update task based on the update failure level, where the preset condition includes that the update failure level is a target level.

Optionally, the preset condition further includes that the target component includes at least one of the following: a power component of the first terminal device and a power supply component of the first terminal device.

Optionally, the receiving unit 1001 is further configured to receive third information from the first terminal device, where the third information indicates that the target component is successfully updated.

Optionally, the sending unit 1003 is further configured to send first prompt information to a second terminal device, where the first prompt information indicates that the server plans to deliver the rescue update task to the second terminal device. The sending unit 1003 is further configured to send second prompt information to the second terminal device, where the second prompt information indicates that the first terminal device is successfully updated.

Optionally, the receiving unit 1001 is further configured to receive enabling information from the second terminal device, where the enabling information is used by a user to determine to enable a function of the rescue update task.

In this embodiment, operations performed by units in the server are similar to those described in the embodiments shown in FIG. 1 to FIG. 8. Details are not described herein again.

In this embodiment, after a vehicle fails to be updated, the receiving unit 1001 receives the update failure information of the plurality of components sent by the vehicle, and the processing unit 1002 determines the rescue update task based on actual failure information, where the rescue update task is related to the to-be-re-updated target component in the plurality of components. Further, the vehicle executes the strategy corresponding to the rescue update task and re-updates the target component, where the strategy is used to limit driving of the vehicle. The server may automatically determine the to-be-re-updated target component based on the update failure information reported by the vehicle. In addition, the vehicle automatically executes the strategy corresponding to the rescue update task and re-updates the target component in time, so that problems of vehicle power loss, battery overdischarge, and the like caused by an update failure can be reduced.

FIG. 11 is a diagram of a structure of another server according to this application. The server may include a processor 1101, a memory 1102, and a communication port 1103. The processor 1101, the memory 1102, and the communication port 1103 are interconnected through a line. The memory 1102 stores program instructions and data.

The memory 1102 stores program instructions and data corresponding to the steps performed by the server in the implementations shown in FIG. 1 to FIG. 8.

The processor 1101 is configured to perform the steps that are performed by the server and that are shown in any one of the embodiments shown in FIG. 1 to FIG. 8.

The communication port 1103 may be configured to receive and send data, and is configured to perform steps related to obtaining, sending, and receiving in any one of the embodiments shown in FIG. 1 to FIG. 8.

In an implementation, the server may include more or fewer components than those in FIG. 11. This is merely an example description and is not limited in this application.

In the several embodiments provided in this application, it should be understood that the disclosed system, apparatus, and method may be implemented in other manners. For example, the described apparatus embodiment is merely illustrative. For example, division into units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate components may or may not be physically separate, and parts displayed as units may or may not be physical units, may be located in one place, or may be distributed on a plurality of network units. Some or all of the units may be selected based on actual requirements to achieve the objectives of the solutions of embodiments.

In addition, function units in embodiments of this application may be integrated into one processing unit, or each of the units may exist alone physically, or two or more units may be integrated into one unit. All or some of the integrated units may be implemented by using software, hardware, firmware, or any combination thereof.

When software is used to implement the integrated units, all or some of the integrated units may be implemented in a form of a computer program product. The computer program product includes one or more computer instructions. When the computer program instructions are loaded and executed on the computer, all or some of the procedures or functions according to embodiments of the present invention are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid state drive (solid state drive, SSD)), or the like.

In the specification, claims, and accompanying drawings of this application, the terms "first", "second", and so on are intended to distinguish between similar objects but do not necessarily indicate a specific order or sequence. It should be understood that the terms used in such a way are interchangeable in appropriate circumstances. This is merely a discrimination manner that is used when objects having a same attribute are described in embodiments of this application. In addition, the terms "include", "contain" and any other variants mean to cover the non-exclusive inclusion, so that a process, method, system, product, or device that includes a series of units is not necessarily limited to those units, but may include other units not expressly listed or inherent to such a process, method, product, or device.

## Claims

1. A device rescue method, wherein the method is applied to a first terminal device, and the method comprises:
sending first information to a server, wherein the first information comprises update failure information of a plurality of components in the first terminal device;
receiving second information from the server, wherein the second information is used to trigger a rescue update task of the first terminal device, and the rescue update task is related to a to-be-re-updated target component in the plurality of components;
executing a strategy corresponding to the rescue update task, wherein the strategy is used to limit driving of the first terminal device; and
re-updating the target component.

2. The method according to claim 1, wherein the strategy comprises at least one of the following: performing a high-voltage turn-off operation and ignoring a precondition check on the first terminal device; and the precondition comprises at least one of the following: a power check of the first terminal device and a power supply check of the terminal device.

3. The method according to claim 1 or 2, wherein the target component comprises at least one of the following: a power component of the first terminal device and a power supply component of the first terminal device.

4. The method according to any one of claims 1 to 3, wherein after the re-updating the target component, the method further comprises:
sending third information to the server, wherein the third information indicates that the target component is successfully updated.

5. A device rescue method, wherein the method is applied to a server, and the method comprises:
receiving first information from a first terminal device, wherein the first information comprises update failure information of a plurality of components in the first terminal device;
determining a to-be-re-updated target component in the plurality of components based on the first information;
determining a rescue update task of the target component; and
sending second information to the first terminal device, wherein the second information is used to trigger the first terminal device to execute a strategy corresponding to the rescue update task, and the strategy is used to limit driving of the first terminal device.

6. The method according to claim 5, wherein before the determining a rescue update task of the target component, the method further comprises:
determining an update failure level of the target component; and
the determining a rescue update task of the target component comprises:
if a preset condition is met, determining the rescue update task based on the update failure level, wherein the preset condition comprises that the update failure level is a target level.

7. The method according to claim 6, wherein the preset condition further comprises that the target component comprises at least one of the following: a power component of the first terminal device and a power supply component of the first terminal device.

8. The method according to any one of claims 5 to 7, wherein after the sending second information to the first terminal device, the method further comprises:
receiving third information from the first terminal device, wherein the third information indicates that the target component is successfully updated.

9. The method according to claim 8, wherein before the determining a rescue update task of the target component in the plurality of components based on the first information, the method further comprises:
sending first prompt information to a second terminal device, wherein the first prompt information indicates that the server plans to deliver the rescue update task to the second terminal device; and
after the receiving third information from the first terminal device, the method further comprises:
sending second prompt information to the second terminal device, wherein the second prompt information indicates that the first terminal device is successfully updated.

10. The method according to any one of claims 5 to 9, wherein before the determining a rescue update task of the target component in the plurality of components based on the first information, the method further comprises:
receiving enabling information from the second terminal device, wherein the enabling information is used by a user to determine to enable a function of the rescue update task.

11. A first terminal device, wherein the first terminal device comprises:
a sending unit, configured to send first information to a server, wherein the first information comprises update failure information of a plurality of components in the first terminal device;
a receiving unit, configured to receive second information from the server, wherein the second information is used to trigger a rescue update task of the first terminal device, and the rescue update task is related to a to-be-re-updated target component in the plurality of components; and
a processing unit, configured to execute a strategy corresponding to the rescue update task, wherein the strategy is used to limit driving of the first terminal device, wherein
the processing unit is further configured to re-update the target component.

12. The device according to claim 11, wherein the strategy comprises at least one of the following: performing a high-voltage turn-off operation and ignoring a precondition check on the first terminal device; and the precondition comprises at least one of the following: a power check of the first terminal device and a power supply check of the terminal device.

13. The device according to claim 11 or 12, wherein the target component comprises at least one of the following: a power component of the first terminal device and a power supply component of the first terminal device.

14. The device according to any one of claims 11 to 13, wherein the sending unit is further configured to send third information to the server, wherein the third information indicates that the target component is successfully updated.

15. A server, wherein the server comprises:
a receiving unit, configured to receive first information from a first terminal device, wherein the first information comprises update failure information of a plurality of components in the first terminal device;
a processing unit, configured to determine a to-be-re-updated target component in the plurality of components based on the first information, wherein
the processing unit is further configured to determine a rescue update task of the target component; and
a sending unit, configured to send second information to the first terminal device, wherein the second information is used to trigger the first terminal device to execute a strategy corresponding to the rescue update task, and the strategy is used to limit driving of the first terminal device.

16. The server according to claim 15, wherein the processing unit is further configured to determine an update failure level of the target component; and
the processing unit is specifically configured to: if a preset condition is met, determine the rescue update task based on the update failure level, wherein the preset condition comprises that the update failure level is a target level.

17. The server according to claim 16, wherein the preset condition further comprises that the target component comprises at least one of the following: a power component of the first terminal device and a power supply component of the first terminal device.

18. The server according to any one of claims 15 to 17, wherein the receiving unit is further configured to receive third information from the first terminal device, wherein the third information indicates that the target component is successfully updated.

19. The server according to claim 18, wherein the sending unit is further configured to send first prompt information to a second terminal device, wherein the first prompt information indicates that the server plans to deliver the rescue update task to the second terminal device; and
the sending unit is further configured to send second prompt information to the second terminal device, wherein the second prompt information indicates that the first terminal device is successfully updated.

20. The server according to any one of claims 15 to 19, wherein the receiving unit is further configured to receive enabling information from the second terminal device, wherein the enabling information is used by a user to determine to enable a function of the rescue update task.

21. A first terminal device, comprising a processor, wherein the processor is coupled to a memory, the memory is configured to store a program or instructions, and when the program or the instructions are executed by the processor, the first terminal device is enabled to perform the method according to any one of claims 1 to 4.

22. A server, comprising a processor, wherein the processor is coupled to a memory, the memory is configured to store a program or instructions, and when the program or the instructions are executed by the processor, the server is enabled to perform the method according to any one of claims 5 to 10.

23. A communication system, wherein the communication system comprises the first terminal device according to claim 21 and/or the server according to claim 22.

24. A vehicle, comprising the first terminal device according to any one of claims 11 to 14.

25. A computer storage medium, comprising computer instructions, wherein when the computer instructions are run on a terminal device, the terminal device is enabled to perform the method according to any one of claims 1 to 10.

26. A computer program product, wherein when the computer program product runs on a computer, the computer is enabled to perform the method according to any one of claims 1 to 10.
